Europäisches Patentamt

European Patent Office

Office européen des brevets

(19)

(11) Publication number: **0 067 199**
**B1**

(12) # EUROPEAN PATENT SPECIFICATION

(45) Date of publication of patent specification: **29.10.86**

(51) Int. Cl.⁴: **F 16 D 11/12, B 66 D 1/00**

(21) Application number: **82900238.5**

(22) Date of filing: **04.12.81**

(86) International application number:
**PCT/US81/01616**

(87) International publication number:
**WO 82/02232 08.07.82 Gazette 82/17**

(54) **A WINCH CLUTCH.**

(30) Priority: **22.12.80 US 218349**

(43) Date of publication of application:
**22.12.82 Bulletin 82/51**

(45) Publication of the grant of the patent:
**29.10.86 Bulletin 86/44**

(84) Designated Contracting States:
**FR**

(56) References cited:
**DE-B-2 853 970**
**FR-A- 514 290**
**FR-A- 667 440**
**FR-A-1 150 579**
**FR-A-1 175 218**
**FR-A-1 223 667**
**US-A-1 380 917**
**US-A-1 467 554**
**US-A-1 590 304**
**US-A-1 808 770**
**US-A-1 936 713**
**US-A-2 379 320**
**US-A-2 498 399**

(73) Proprietor: **RAMSEY WINCH COMPANY INC.**
**1600 North Garnett**
**Tulsa, OK 74116 (US)**

(72) Inventor: **BALL, Harold M.**
**2705 East Jackson Place**
**Broken Arrow, OK 74012 (US)**
Inventor: **BEACH, Robert G.**
**1606 South 117 East Ave**
**Tulsa, OK 74128 (US)**

(74) Representative: **Simonnot, Bernard et al**
**Cabinet Simonnot 49, Rue de Provence**
**F-75442 Paris Cédex 09 (FR)**

EP 0 067 199 B1

Courier Press, Leamington Spa, England.

## Description

This invention relates to an improvement in the structure of a winch clutch and provides locking means which assure safe winch operation.

A winch clutch comprising a clutch housing, a driving shaft, a cylindrical clutch body mounted on said driving shaft, a locking ring slidably mounted on said clutch body, and an actuating yoke is known for example from FR—A—1 223 667.

However, in the winch clutch described in FR—A—1 223 667, there is no direct rolling contact between balls 19 and roller 22 to obtain the rolling contact for friction reduction obtained by the present invention. Balls 19 contact pawl 20. The heel 25 of pawl 20 then bears against roller 22. Our interpretation of the specification indicates that roller 22 is not free to rotate when engaged, but rather provides for coupling rotating parts by a clamping action and not by a grooved coupling.

As for FR—A—1 150 579, rollers 4 and 5 do not interact between two members with relative rotational movement when the clutch is engaged, but rather between two engaged members without relative movement. Sleeve 14 contacts springs 6 which move radially to displace rollers 4 and 5. Thus, the rollers do not appear to affect frictional forces when sleeve 14 is moved axially. Further, it would not appear that the patent suggests any improvement from mixing ball members with dowel members. However, in the case of the present invention, the ball members are free to rotate both axially and circumferentially to minimize the frictional contact during clutching action and during rotation of the engaged clutch members and driving members.

The object of the invention is to provide a clutch for coupling and de-coupling a driven shaft from a driving shaft where the shafts are mechanically interlocked when the clutch mechanism is engaged and yet rotate independently when the clutch is disengaged. It will be apparent that the mechanical interaction requires mechanical movement between parts which may be carrying substantial mechanical loads, generating high friction forces. In the present invention, the applicant has overcome these frictional forces by maximizing the utilization of rolling contact during both rotational and axial translations of the clutch. Dowel pins 3 provide the mechanical interaction and are free to rotate during mechanical engagement and disengagement. Balls 4 provide the necessary force for engaging and disengaging dowel pins 3. Balls 4 are free to rotate freely as needed to minimize the friction forces between adjacent surfaces. Thus, a direct mechanical interconnection is established which can be freely engaged and disengaged. Claim 1 recites the relationships necessary to achieve the various rolling contacts to carry out the object of the invention wherein axial and radial slots are provided for permitting free rotational movement of the surfaces confined within the slots and while providing the confining forces necessary to engage the driving and the driven shafts.

The present invention presents a new and novel clutch operation in a winch assembly. This clutch assembly includes locked features which heretofore have not been used in a winch clutch assembly. The features incorporated in this clutch lock the cable drum directly in the power shaft.

The winch clutch assembly of this invention comprises a clutch assembly, for use in particular with a winch, comprising a clutch housing, a driving shaft, a cylindrical clutch body mounted on said driving shaft, a locking ring slidably mounted on said clutch body, and an actuating yoke, characterised in that said driving shaft is provided with a plurality of axially extending grooves which are spaced equidistantly in circumferential direction on the surface of said driving shaft and that said cylindrical clutch body being attached to a driven part is provided with at least one axially extending slot and at least one radially extending guiding means which extend from the outer cylindrical surface of said clutch body to the bottom of said slot, which slot accommodates a dowel pin and said guiding means accommodating a pair of balls; the clutch being further characterised in that said locking ring is provided with two axially spaced circumferential grooves on its inner cylindrical surface in order to accommodate said balls when the clutch is disengaged whereas the lands bordering said grooves force the balls into the guiding means and thereby urge the corresponding dowel pin into the groove in the driving shaft when the clutch is in its engaged position, said locking ring being actuated by said yoke which is pivotably mounted on the clutch housing and attached to a shifting handle which extends outside of said clutch housing.

The shifting spring loaded clutch handle travel is controlled by a two position locking device which locks the clutch in either a disengaged or engaged position so that the mode of operation can only be changed by lifting the locking pin on the shifting clutch handle from an engaged position to a disengaged position or vice versa. However, the operation of this winch clutch is not confined to the handle herein described. The engaging means between the power shaft and the cable drum wherein the shifting and movement of the steel dowel pins locks the power shaft with the cable drum positively and safely connect the power shaft to the cable drum. This is accomplished when the steel dowel pins fall into slots in the power shaft by movement of the clutch handle from position second to position first. The clutch handle movement causes steel balls to place the steel dowel pins to rest in the slots in the power shaft. The clutch handle is locked in an engaged position first and held in that first position by a locking pin. To disengage the clutch, the clutch handle is unlocked, by raising the locking pin located on the clutch handle and moving it to position second which locks the clutch handle securely in this position.

Figure 1 is a partial cross-sectional view of the winch clutch assembly.

Figure 2 is a cross-sectional side view of the winch clutch assembly in engaged position.

Figure 3 is a cross-sectional side view of the winch clutch assembly in a disengaged position.

Figure 4 is a top view of the clutch assembly which shows the locking pin in an engaged position.

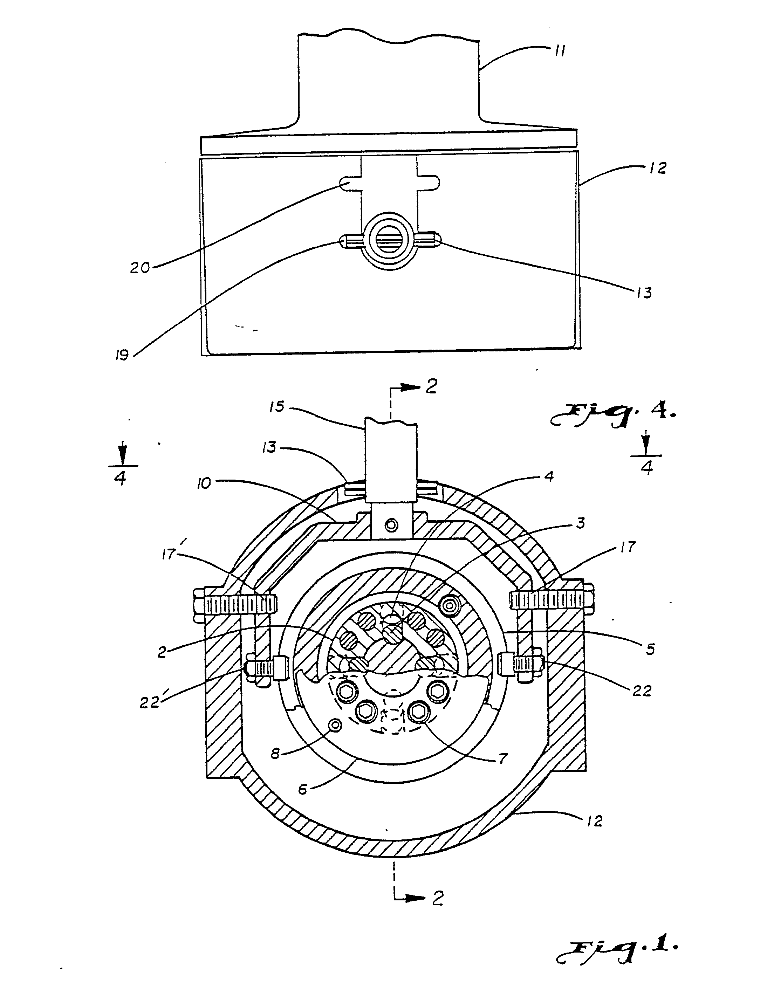

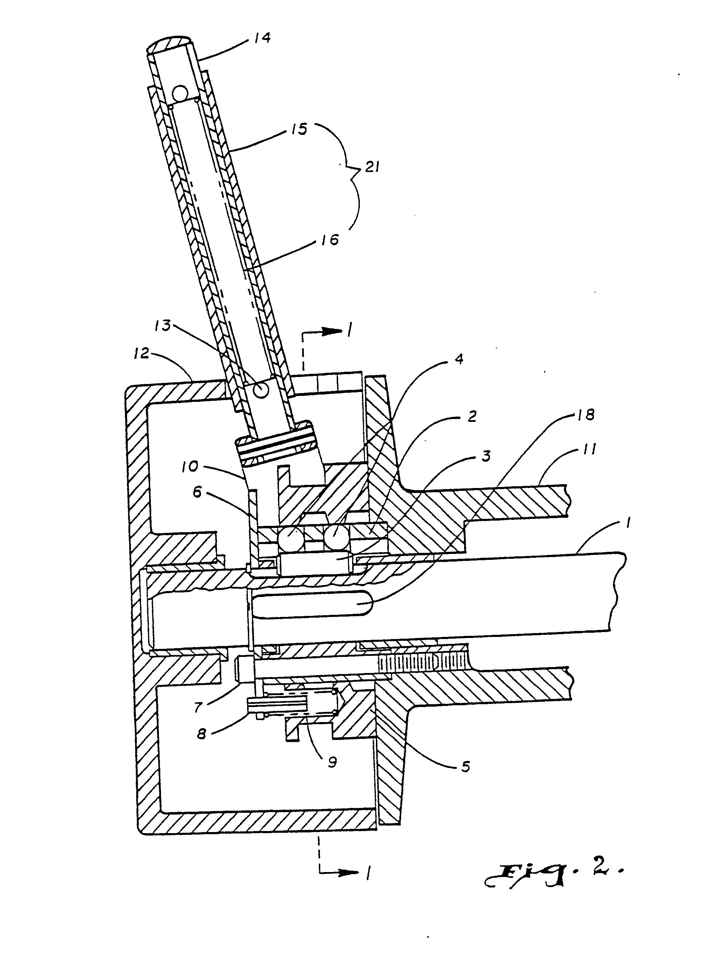

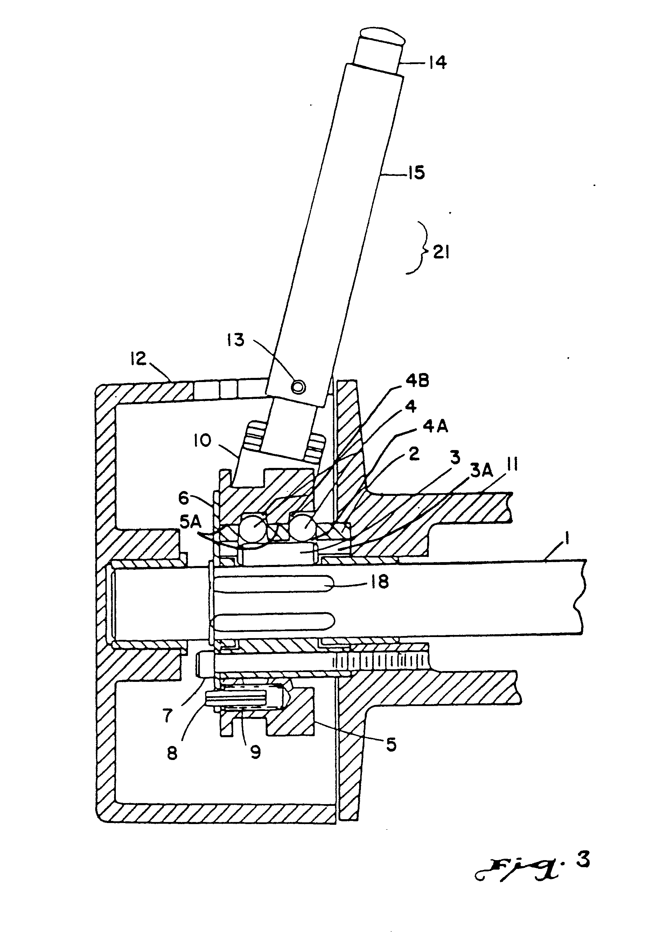

Figure 1 shows a partial cross-sectional view of the winch clutch in an engaged position. The clutch body 2 holds four steel dowel pins 3 in axially extending slots 3A, Fig. 3, and eight steel balls 4 within radially extending guide means 4A, Fig. 3, in an assembly comprising four groups containing one steel dowel pin 3 and two steel balls 4 each. The clutch locking ring 5 has two axially spaced circumferential grooves 4B defining lands 5A, Fig. 3, on the inner surface for movement over the surface of the clutch body 2. The retainer plate 6 is used to mount eight screws 7 which attach the clutch body 2 to the cable drum 11, Fig. 2. A guide post 8 is also assembled on the retainer plate 6 and is useful for aligning springs 9, Fig. 2. Yoke 10 is mounted at pivot point 17 and 17' and moves in a groove at positions 22 and 22' in clutch locking ring 5. The yoke 10 is pivotally attached to clutch housing 12 at 17 and 17'. Locking pin 13 is shown in place attached to movable outer tube 15 which is part of the shifting handle made up of inner tube 14, Fig. 2, and the movable outer tube 15. Outer tube 15 which is spring loaded moves in an up and down direction.

Figure 2 is a cross-sectional view of the clutch assembly in an engaged position. The clutch housing 12 which encloses the complete clutch assembly supports one end of the power shaft 1. Clutch body 2 holds eight steel balls shown as 4 and four steel dowel pins shown as 3 in the assembly. As stated in the preceding paragraph, retainer plate 6 with eight cap screws 7 holds clutch body 2 attached to cable drum 11. See Figs. 1, 2 and 3. Guide post 8 supports a spring 9 which is located in a hole in the clutch locking ring 5. Shifting handle 21 is shown in the engaged position in Fig. 2. Sliding clutch locking ring 5 has moved lands 5A over steel balls 4, moving steel dowel pins 3 from an upper position within grooves 4B and guide means 4A, as shown in Fig. 3, to a lower position beneath lands 5A and within slots 3A, as shown in Fig. 2. The steel dowel pins 3 are shown resting in slot 18 which locks power shaft 1 tightly to clutch body 2 which is attached to cable drum 11; locking pin 13 shown in Fig. 4 is shown on shifting handle 21, Fig. 2. The outer tube of shifting handle 21 is shown as 15, spring 16 is located within the inner tube of shifting handle 21.

Figure 3 is a cross-sectional view of the winch clutch in a disengaged position. The component parts are identical to the parts shown in Fig. 2. The shifting handle 21 is shown in a disengaged position in Fig. 3. In this view the steel balls 4 have moved upwardly into grooves 4B in the clutch locking ring 5 and the steel dowel pins 3 have moved out of the slots 18 in the power shaft 1 and within axial slots 3A defined by clutch body 2. The cable drum 11 is shown disconnected in Fig. 3 and is free to rotate.

Figure 4 is a partial top view of clutch housing 12 showing the engaged and disengaged slots 19 and 20 in the top structure of housing 12. The slots are numbered 19 (engaged) and 20 (disengaged). The position locking pin is shown in the engaged position.

Operation of the Winch Clutch

The winch clutch should be in a position as shown in Fig. 3. The power shaft 1 is set into rotation, the spring loaded outer tube 15 in the shifting handle 21 is raised to get the locking pin 13 unseated from position 20, Fig. 4.

The shifting handle 21 is manually moved to position 19, Fig. 4. At the same time yoke 10, Fig. 1, which fits into a slot in the clutch locking ring 5, moves the clutch locking ring 5 into the position shown in Fig. 2 with lands 5A (Fig. 3) engaging balls 4. As the handle is moving into position 19, Fig. 4, power shaft 1 is rotating. To place the dowel pins 3, Fig. 2, into slots 18 in power shaft 1, manual pressure is required on the yoke 10, Fig. 1, which moves the clutch locking ring 5, Fig. 2, over the shifting surface of clutch body 2, Fig. 2. Lands 5A, Fig. 3 of clutch locking ring 5, Fig. 2, exert pressure on the steel balls 4 which in turn force the dowel pins 3 into a locked position connecting slots 18 with slots 3A as shown in Fig. 2. The clutch is now in an engaged position. To disengage the winch clutch assembly, raise outer tube 15 in shifting handle 21 to release locking pin 13, shift to the position shown in Fig. 3. In this position, cable drum 11 is disconnected from power shaft 1.

**Claims**

1. A clutch assembly, for use in particular with a winch, comprising a clutch housing (12), a driving shaft (1), a cylindrical clutch body (2) mounted on said driving shaft (1), a locking ring (5) slidably mounted on said clutch body (2), and an actuating yoke, characterised in that said driving shaft (1) is provided with a plurality of axially extending grooves (18) which are spaced equidistantly in circumferential direction on the surface of said driving shaft (1) and that said cylindrical clutch body (2) being attached to a driven part is provided with at least one axially extending slot (3A) and at least one radially extending guiding means (4A) which extend from the outer cylindrical surface of said clutch body (2) to the bottom of said slot (3A), which slot accommodates a dowel pin (3) and said guiding means (4A) accommodating a pair of balls (4); the clutch being further characterised in that said locking ring (5) is provided with two axially spaced circumferential grooves (4B) on its inner cylindrical surface in order to accommodate said balls (4) when the clutch is disengaged whereas the lands (5A) bordering said grooves (4B) force the balls (4) into the guiding means (4A) and thereby urge the corresponding dowel pin (3) into the groove (18) in the driving shaft (1) when the clutch is in its engaged position, said locking ring (5) being actuated by said yoke (10) which is pivotably mounted on the clutch housing (12) and attached to a shifting handle (21) which extends outside of said clutch housing (12).

2. A clutch assembly as claimed in claim 1 wherein means are provided for locking said shifting handle (21) in a selected position, the locking means comprising an inner tube (14) connected to said yoke (10), an outer tube (15) disposed concentrically about said inner tube (14) and a pin (13) fixed to said outer tube (15) and being axially displaceable relative to said inner tube (14), said clutch housing (12) further defining at least two locking slots (19, 20) adapted to receive said pin (13) for locking said shifting handle (21) in positions defined by said locking slots (19, 20).

3. The clutch assembly as claimed in claim 1 further including a retainer plate (6) fixed to said cylindrical clutch body (2) and at least two springs (9) mounted to said locking ring (5) and bearing against said retainer plate (6) to axially urge said locking ring (5) to an engaged position of said balls (4) with said dowel pin (3).

4. The clutch assembly as claimed in claim 3, further including a cable drum (11) concentric with said driving shaft (1) and a plurality of cap screws (7) clamping said cable drum (11) to said cylindrical clutch body (2) for rotation with said driving shaft (1) when said locking ring (5) is in the engaged position.

**Patentansprüche**

1. Kupplung, zur Verwendung besonders mit einer Winde, mit einem Kupplungsgehäuse (12), einer Antriebswelle (1), einem auf der Antriebswelle (1) montierten zylindrischen Kupplungskörper (2), einem auf dem Kupplungskörper (2) verschiebbar gehaltenen Verriegelungsring (5) und einer Betätigungsgabel, dadurch gekennzeichnet, daß die Antriebswelle (1) mit einer Mehrzahl von axial verlaufenden Nuten (18) ausgebildet ist, die sich in gleichen Abständen in Umfangsrichtung auf der Oberfläche der Antriebswelle (1) erstrecken, und daß der zylindrische Kupplungskörper (2) mit einem angetriebenen Teil verbunden und mit wenigstens einem axial verlaufenden Schlitz (3A) und mit wenigstens einer radial verlaufenden Führung (4A) versehen ist, die sich von der äußeren zylindrischen Oberfläche des Kupplungskörpers (2) bis zum Boden des Schlitzes (3A) erstrecken, wobei der Schlitz einen Zapfen (3) aufnimmt und die Führung (4A) ein Paar von Kugeln (4) aufnimmt und wobei die Kupplung weiter dadurch gekennzeichnet ist, daß der Verriegelungsring (5) an seiner inneren zylindrischen Oberfläche mit zwei in einem axialen Abstand voneinander ausgebildeten Umfangsnuten (4B) zur Aufnahme der Kugeln (4), wenn die Kupplung außer Eingriff ist, ausgebildet ist, während die an die Nuten (4B) angrenzenden Stege (5A) die Kugeln (4) in das Führungselement (4A) drücken und dadurch den entsprechenden Zapfen (3) in die Nut (18) in der Antriebswelle (1) drücken, wenn sich die Kupplung in ihrer Einkupplungsstellung befindet, wobei der Verriegelungsring (5) durch die Gabel (10) betätigt wird, die am Kupplungsgehäuse (12) schwenkbar gehalten und mit einem Schalthandhebel (21) verbunden ist, der sich außerhalb des Kupplungsgehäuses (12) erstreckt.

2. Kupplung nach Anspruch 1 mit einer Vorrichtung zum Verriegeln des Schalthandhebels in einer gewählten Stellung, wobei die Verriegelungsvorrichtung ein mit der Gabel (10) verbundenes Innenrohr (14), ein das Innenrohr (14) konzentrisch umgebendes Außenrohr (15) und einen am Außenrohr (15) befestigten und relativ zum Innenrohr (14) axial verschiebbaren Stift (13) aufweist und das Kupplungsgehäuse (12) außerdem wenigstens zwei Verriegelungsschlitze (19, 20) bildet, welche zur Aufnahme des Stiftes (13) zum Verriegeln des Schalthandhebels (21) in den durch die Verriegelungsschlitze (19, 20) definierten Stellungen bestimmt sind.

3. Kupplung nach Anspruch 1, welche außerdem eine am zylindrischen Kupplungskörper (2) befestigte Halteplatte (6) und wenigstens zwei an dem Verriegelungsring (5) montierte Federn (9) aufweist, die sich an der Halteplatte (6) abstützen und den Verriegelungsring (5) axial in eine Stellung drücken, wo die Kugeln (4) in Eingriff mit dem Zapfen (3) sind.

4. Kupplung nach Anspruch 3, welche außerdem eine mit der Antriebswelle (1) konzentrische Kabeltrommel (11) und eine Mehrzahl von Kopfschrauben (7) aufweist, welche die Kabeltrommel (11) am zylindrischen Kupplungskörper (2) befestigen, so daß sich dieser mit der Antriebswelle (1) dreht, wenn sich der Verriegelungsring (5) in der Einkupplungsstellung befindet.

**Revendications**

1. Accouplement destiné à être utilisé en particulier avec un treuil, comprenant un boîtier (12), un arbre menant (1), un corps cylindrique (2) monté sur cet arbre (1), une bague (5) de verrouillage montée coulissante sur ce corps (2) et une chape d'embrayage, caractérisé en ce que l'arbre menant (1) comporte des gorges (18) orientées axialement, qui sont équidistantes circonférentiellement sur sa surface et en ce que le corps cylindrique (2), qui est fixé à un élément mené, comporte au moins une gorge (3A) orientée axialement et au moins un élément radial (4A) de guidage qui va de la surface extérieure de ce corps au fond de cette gorge (3A), laquelle loge un goujon (3), cet élément (4A) de guidage logeant deux billes (4); l'accouplement étant encore caractérisé en ce que la bague (5) de verrouillage comporte dans sa surface cylindrique intérieure deux gorges circonférentielles (4B) écartées axialement, destinées à recevoir les billes (4) lorsque l'accouplement est débrayé, tandis que les cordons (5A) qui bordent ces gorges (4B) repoussent ces billes (4) dans l'élément (4A) de guidage en repoussant le goujon (3) correspondant dans la gorge (18) de l'arbre menant (1) lorsque l'accouplement est embrayé, la bague (5) de verrouillage étant manoeuvrée par la chape (10), qui est articulée sur le boîtier (12) de l'accouplement et est fixée à un levier (21) d'embrayage qui fait saillie de ce boîtier (12).

2. Accouplement selon la revendication 1, dans lequel des éléments sont prévus pour immobiliser le levier (21) d'embrayage dans une position choisie, ces éléments comprenant un tube intérieur (14) relié à la chape (10), un tube extérieur (15) disposé concentriquement autour de ce tube intérieur (14) et une goupille (13) qui est fixée à ce tube extérieur (15) et qui peut être déplacée axialement par rapport au tube intérieur (14), le boîtier (12) délimitant au moins deux encoches (19, 20) de verrouillage destinées à loger cette goupille (13) de façon à immobiliser le levier (21) d'embrayage dans des positions définies par ces encoches (19, 20).

3. Accouplement selon la revendication 1, comportant une plaque (6) de retenue fixée au corps cylindrique (2) et au moins deux ressorts (9) montés sur la bague (5) de verrouillage et portant contre cette plaque (6) de façon à repousser axialement cette bague (5) à une position dans laquelle les billes (4) sont en prise avec le goujon (3).

4. Accouplement selon la revendication 3, comprenant un tambour (11) d'enroulement d'un câble, concentrique à l'arbre menant (1) et plusieurs vis (7) à tête, qui fixent ce tambour (11) au corps cylindrique (2), de manière qu'il tourne avec cet arbre (1) lorsque la bague (5) de verrouillage est en position d'embrayage.

Fig. 4.

Fig. 1.

Fig. 2.

*Fig. 3*